(19) Europäisches Patentamt
European Patent Office
Office européen des brevets

(11) Veröffentlichungsnummer: **0 385 937**
**A1**

# (12) EUROPÄISCHE PATENTANMELDUNG

(21) Anmeldenummer: **90810122.3**

(51) Int. Cl.5: **C08G 73/12, C08F 222/40**

(22) Anmeldetag: **20.02.90**

(30) Priorität: **28.02.89 CH 734/89**
**22.09.89 CH 3444/89**

(43) Veröffentlichungstag der Anmeldung:
**05.09.90 Patentblatt 90/36**

(84) Benannte Vertragsstaaten:
**DE ES FR GB IT NL SE**

(71) Anmelder: **CIBA-GEIGY AG**
**Klybeckstrasse 141**
**CH-4002 Basel(CH)**

(72) Erfinder: **Kramer, Andreas, Dr.**
**Bundtels**
**CH-3186 Düdingen(CH)**

## (54) Härtbare Gemische auf Basis von aromatischen Bismaleinimiden.

(57) Härtbare Gemische enthaltend

a) ein aromatisches Bismaleinimid der Formel I

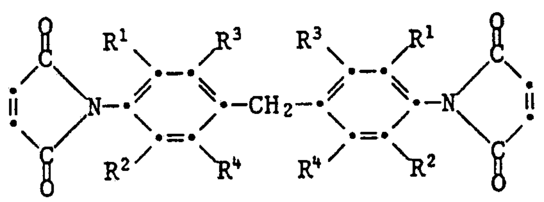

(I),

worin $R^1$ und $R^2$ gleich oder verschieden sind und je ein $C_1$-$C_4$-Alkyl bedeuten und $R^3$ und $R^4$ unabhängig voneinander je für ein Wasserstoff-oder Halogenatom stehen oder eine Mischung aus einem aromatischen Bismaleinimid der Formel I und N,N′-4,4′-Methylen-bis-(phenylmaleinimid) und

b) ein Alkenylphenol, einen Alkenylphenolether oder deren Gemische, wobei die Alkenylgruppe mindestens drei C-Atome enthält, zeichnen sich durch eine günstige Verarbeitbarkeit aus, eignen sich vorteilhaft zur Herstellung von Prepregs oder faserverstärkten Verbundstoffen und ergeben Formstoffe mit einer hohen Bruchzähigkeit.

EP 0 385 937 A1

## Härtbare Gemische auf Basis von aromatischen Bismaleinimiden

Die vorliegende Erfindung betrifft härtbare Gemische enthaltend (a) ein aromatisches, alkylsubstituiertes Bismaleinimid oder eine Mischung aus einem aromatischen, alkylsubstituierten Bismaleinimid und N,N′-4,4′-Methylen-bis-(phenylmaleinimid) und (b) ein Alkenylphenol oder einen Alkenylphenolether sowie die daraus durch Härtung erhaltenen vernetzten, unschmelzbaren Produkte.

Härtbare Gemische auf Basis von aromatischen Bismaleinimiden und Alkenylphenolen sind bekannt, beispielsweise aus der DE-OS 26 27 045 und den EP-Patenten 14 816 und 227 598. Während in der DE-OS 26 27 045 und im EP-Patent 14 816 vorzugsweise Bismaleinimide vom Typ des N,N′-4,4′-Methylen-bis-(phenylmaleinimids) verwendet werden, enthalten die härtbaren Gemische gemäss EP-Patent 227 598 ein Phenylindan-bis-maleinimid. Diese bekannten härtbaren Gemische lassen hinsichtlich ihrer Verarbeitbarkeit, insbesondere in der Schmelze, noch zu wünschen übrig.

Es wurde nun gefunden, dass man bei Verwendung von aromatischen, in o,o′-Stellung zur Imidgruppe alkylsubstituierten Methylen-bis-(phenylmaleinimiden) eine bessere Mischbarkeit mit Alkenylphenolen und Alkenylphenolethern erreicht und dass solche härtbaren Gemische bei erhöhter Temperatur, wie beispielsweise 120 °C, längere, also günstigere Verarbeitungszeiten (pot life) aufweisen. Es wurde ferner gefunden, dass Mischungen aus den aromatischen, in o,o′-Stellung zur Imidgruppe alkylsubstituierten Methylen-bis-(phenylmaleinimiden) und N,N′-4,4′-Methylen-bis-(phenylmaleinimid) weitere Vorteile bieten, da aus diesen mit Alkenylphenolen oder Alkenylphenolethern Gemische bereits bei 100 °C hergestellt werden können. Die aus den erfindungsgemässen härtbaren Gemischen durch Härtung hergestellten Formstoffe weisen ausserdem bessere Zähigkeitseigenschaften und eine bessere Feuchtigkeitsresistenz auf.

Gegenstand vorliegender Erfindung sind somit härtbare Gemische enthaltend

(a) ein aromatisches Bismaleinimid der Formel I

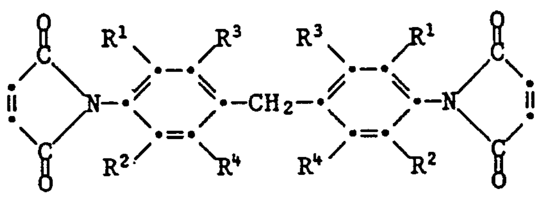

(I),

worin $R^1$ und $R^2$ gleich oder verschieden sind und je ein $C_1$-$C_4$-Alkyl bedeuten und $R^3$ und $R^4$ unabhängig voneinander je für ein Wasserstoff-oder Halogenatom stehen, oder eine Mischung aus einem aromatischen Bismaleinimid der Formel I und N,N′-4,4′-Methylen-bis-(phenylmaleinimid) im Molverhältnis von 1:0,3 - 1,2 und

b) ein Alkenylphenol, einen Alkenylphenolether oder deren Gemische, wobei die Alkenylgruppe mindestens drei C-Atome enthält.

Vorzugsweise enthalten die erfindungsgemässen Gemische als Komponente (a) ein aromatisches Bismaleinimid der Formel I und als Komponente (b) ein Alkenylphenol, einen Alkenylphenolether oder deren Gemische, wobei die Alkenylgruppe mindestens drei C-Atome enthält.

Im allgemeinen enthalten die erfindungsgemässen Gemische pro Mol der Komponente (a) 0,05 bis 2,0 Mole, vorzugsweise 0,5 bis 1,2 Mole, der Komponente (b).

Vorzugsweise sind in den erfindungsgemässen Gemischen als Komponente (a) solche aromatische Bismaleinimide enthalten, worin in Formel I $R^1$ und $R^2$ unabhängig voneinander je für Methyl, Ethyl oder Isopropyl stehen und $R^3$ und $R^4$ je ein Wasserstoff- oder Chloratom bedeuten.

Insbesondere verwendet man für die erfindungsgemässen Gemische solche Bismaleinimide der Formel I, worin $R^1$ und $R^2$ unabhängig voneinander je für Methyl, Ethyl oder Isopropyl stehen und $R^3$ und $R^4$ je ein Wasserstoffatom bedeuten.

Enthalten die erfindungsgemässen Gemische als Komponente (a) eine Mischung aus einem aromatischen Bismaleinimid der Formel I und N,N′-4,4′-Methylen-bis-(phenylmaleinimid), so liegen diese vorzugsweise im Molverhältnis von 1:0,9 - 1,1, insbesondere im Molverhältnis von 1:1 vor.

Beispiele für geeignete Bismaleinimide der Formel 1 sind N,N′-4,4′-Methylen-bis-(2-ethyl-6-methylphenylmaleinimid), N,N′-4,4′-Methylen-bis-(2,6-dimethylphenylmaleinimid), N,N′-4,4′-Methylen-bis-(2,6-diethylphenylmaleinimid), N,N′-4,4′-Methylen-bis-(2,6-diisopropylphenylmaleinimid), N,N′-4,4′-Methylen-bis-(2-ethyl-6-isopropylphenylmaleinimid) und N,N′-4,4, -Methylen-bis-(3-chlor-2,6-diethylphenylmaleinimid).

Die Bismaleinimide der Formel I stellen zum Teil bekannte Verbindungen dar und können beispielsweise gemäss dem in der JP-Anmeldung Kokai 61-93159 offenbarten Verfahren hergestellt werden, indem man 1 Mol eines Diamins der Formel Ia

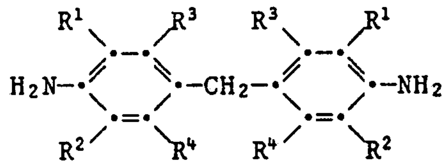

(Ia),

worin $R^1$, $R^2$, $R^3$ und $R^4$ die gleiche Bedeutung wie in Formel I haben, mit 2 Mol Maleinsäureanhydrid in einem organischen Lösungsmittel zur entsprechenden Bismaleinamidsäure umsetzt und diese anschliessend mit wasserentziehenden Mitteln, wie beispielsweise Acetanhydrid, zum Bismaleinimid cyclisiert.

Die Diamine der Formel Ia stellen bekannte Verbindungen dar und werden beispielsweise in der DE-OS 23 39 237 oder in der EP-A-0 171 588 offenbart.

Wie eingangs erwähnt, weisen Mischungen aus einem aromatischen Bismaleinimid der Formel I und N,N′-4,4′-Methylen-bis-(phenylmaleinimid) einen besonderen Vorteil bezüglich der Verarbeitung mit Alkenylphenolen oder Alkenylphenolethern auf. Gegenstand der Erfindung sind somit auch Mischungen aus einem aromatischen Bismaleinimid der Formel I und N,N′-4,4′-Methylen-bis-(phenylmaleinimid) im Molverhältnis von 1:0,3 - 1,2.

Als Alkenylphenole oder Alkenylphenolether (b) können für die erfindungsgemässen Gemische sowohl einkernige als auch mehrkernige, insbesondere zweikernige Alkenylphenole und Alkenylphenolether, verwendet werden, wobei vorzugsweise mindestens ein Kern sowohl eine Alkenylgruppe als auch eine phenolische, gegebenenfalls veretherte OH-Gruppe, enthält.

Es ist bekannt, dass Alkenylphenole durch thermische Umlagerung von Alkenylethern von Phenolen (z.B. des Allylphenylethers), hergestellt werden können (Claisenumlagerung). Diese Alkenylether können auch in bekannter Weise durch Umsetzung von Phenolen und z.B. Allylchlorid in Anwesenheit eines Alkalimetallhydroxids in einem Lösungsmittel hergestellt werden.

Die erfindungsgemässen Gemische enthalten als Komponente (b) vorzugsweise ein Alkenylphenol der Formeln II, III oder IV

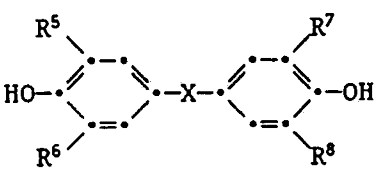

(II),

worin X eine direkte Bindung, Methylen, Isopropyliden, -O-, -S-, -SO-, $-SO_2-$ oder -CO- und $R^5$, $R^6$, $R^7$ und $R^8$ unabhängig voneinander ein Wasserstoffatom oder ein $C_3$-$C_{10}$-Alkenyl bedeuten, wobei mindestens einer der Reste $R^5$ bis $R^8$ für eine Alkenylgruppe steht,

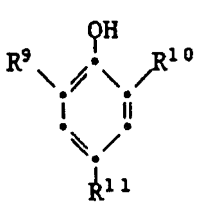

(III),

worin $R^9$, $R^{10}$ und $R^{11}$ unabhängig voneinander ein Wasserstoffatom oder ein $C_3$-$C_{10}$-Alkenyl bedeuten, wobei mindestens einer der Reste $R^9$ bis $R^{11}$ für eine Alkenylgruppe steht, oder

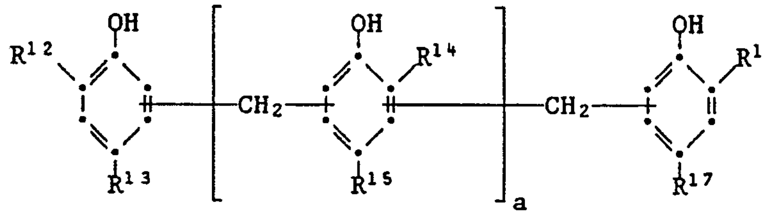

(IV),

worin $R^{12}$, $R^{13}$, $R^{14}$, $R^{15}$, $R^{16}$ und $R^{17}$ unabhängig voneinander ein Wasserstoffatom, $C_1$-$C_4$-Alkyl oder $C_3$-$C_{10}$-Alkenyl bedeuten, wobei mindestens einer der Reste $R^{12}$ bis $R^{17}$ für ein Alkenyl steht, und a eine Zahl von 0 bis 10 bedeutet, oder Ether der Verbindungen der Formeln II bis IV, welche anstelle mindestens einer HO-Gruppe einen $R^{18}$ O-Rest enthalten, wobei $R^{18}$ ein $C_1$-$C_{10}$-Alkyl, $C_6$-$C_{10}$-Aryl oder $C_3$-$C_{10}$-Alkenyl bedeutet.

Als Alkenylgruppe enthalten die Verbindungen der Formeln II bis IV vorzugsweise ein Allyl, Methallyl oder Propenyl.

Von den Verbindungen der Formeln II bis IV werden in den erfindungsgemässen Gemischen bevorzugt Verbindungen der Formel II eingesetzt, insbesondere solche, worin X für Methylen, Isopropyliden, -O-, $-SO_2-$ oder -CO- steht, $R^5$ und $R^7$ je ein Allyl und $R^6$ und $R^8$ je ein Wasserstoffatom bedeuten.

Alkenylsubstituierte Phenole und Polyole werden in den US 4,100,140 und 4,371,719 beschrieben. Typische Verbindungen sind beispielsweise o,o′-Diallylbisphenol A, 4,4′-Dihydroxy-3,3′-diallylbiphenyl, Bis-(4-hydroxy-3-allylphenyl)methan, 2,2-Bis-(4-hydroxy-3,5-diallylphenyl)propan, Eugenol (4-Allyl-2-methoxyphenol), o,o′-Dimethallylbisphenol A, 4,4′-Dihydroxy-3,3′-dimethallylbiphenyl, Bis-(4-hydroxy-3-methallylphenyl)methan, 2,2-Bis-(4-hydroxy-3,5-dimethallylphenyl)propan, 4-Methallyl-2-methoxyphenol, 2,2-Bis-(4-methoxy-3-allylphenyl)propan, 2,2-Bis-(4-methoxy-3-methallylphenyl)propan, 4,4′-Dimethoxy-3,3′-diallylbiphenyl, 4,4′-Dimethoxy-3,3′-dimethallylbiphenyl, Bis-(4-methoxy-3-allylphenyl)methan, Bis-(4-methoxy-3-methallylphenyl)methan, 2,2-Bis-(4-methoxy-3,5-diallylphenyl)propan, 2,2-Bis-(4-methoxy-3,5-dimethallylphenyl)propan, 4-Allylveratrol (4-Allyl-1,2-dimethoxybenzol) und 4-Methallylveratrol (4-Methallyl-1,2-dimethoxybenzol). Besonders bevorzugt ist o,o′-Diallylbisphenol A.

Es können erfindungsgemäss auch Isomerengemische von propenyl- und allylsubstituierten ein- und mehrwertigen Phenolen eingesetzt werden. Bevorzugt werden Gemische von Propenyl- und allylsubstituierten Phenolen der Formel II eingesetzt, insbesondere solche der Formel IIa

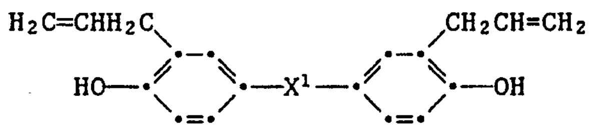

(IIa),

worin $X^1$ Methylen, Isopropyliden oder O ist.

Gute Resultate werden auch mit Gemischen von mehrkernigen Alkenylphenolen und/oder Alkenylphenolethern mit einkernigen Alkenylphenolen und/oder Alkenylphenolethern erreicht.

Es können auch Gemische von Verbindungen, welche nur eine OH-Gruppe und nur eine Alkenylgruppe pro aromatischen Kern enthalten, mit Verbindungen, welche mehrere OH-Gruppen und/oder mehrere Alkenylgruppen pro aromatischen Kern aufweisen, oder Gemische der entsprechenden Phenylether dieser Verbindungen verwendet werden. Auch die entsprechenden Methallylverbindungen können eingesetzt werden.

Für die erfindungsgemässen Gemische sind als Komponente (b) auch Alkenylphenole der Formel V

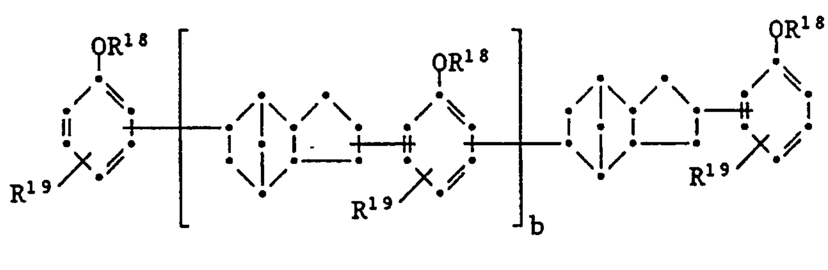

(V)

geeignet, worin entweder $R^{18}$ ein Alkenyl mit 3 bis 6 C-Atomen und $R^{19}$ ein Wasserstoffatom oder $R^{18}$ ein Wasserstoffatom und $R^{19}$ ein Alkenyl mit 3 bis 6 C-Atomen bedeuten und b für einen Zahlenwert von grösser als Null, vorzugsweise zwischen 0,1 und 3,0, steht.

Die Verbindungen der Formel V sind bekannt und werden beispielsweise in der EP-A-0 276 733 näher beschrieben.

Gegebenenfalls können die erfindungsgemässen Gemische als weitere reaktive Verbindung ein Amin (c) enthalten. Für die mit Aminen modifizierten erfindungsgemässen Gemische sind beispielsweise aliphatische, cycloaliphatische oder aromatische primäre oder sekundäre Amine geeignet, wobei aromatische, insbesondere $C_6$-$C_{10}$-Arylendiamine, wie beispielsweise p-Phenylendiamin, m-Phenylendiamin, m-Xylylendiamin, Bis-(4-aminophenyl)-methan und Diaminophenylindan, bevorzugt verwendet werden.

Enthalten die erfindungsgemässen Gemische zusätzlich ein Amin, so liegt dieses in Bezug auf die Komponente (b) im allgemeinen im Molverhältnis 1:0,1 bis 0,1:1 vor. In diesem Falle enthalten die erfindungsgemässen Gemische im allgemeinen pro 1 Mol der Komponente (a) 0,05 bis 2 Mole des Gemisches aus Komponente (b) und Komponente (c).

Typische Amine, die den erfindungsgemässen Gemischen zugesetzt werden können sind beispielsweise Monoethanolamin, Ethylendiamin, Hexamethylendiamin, Trimethylhexamethylendiamin, Diethylentriamin, Triethylentetramin, Tetraethylenpentamin, N,N-Dimethylpropylendiamin-1,3, N,N-Diethylpropylendiamin-1,3, Bis-(4-amino-3-methylcyclohexyl)-methan, Bis-(4aminocyclohexyl)-methan, 2,2-Bis-(4-aminocyclohexyl)-propan, 3,5,5-Trimethyl-cyclohexylamin, N-Aminoethylpiperazin, m-Phenylendiamin, p-Phenylendiamin, Bis-(4-aminophenyl)-methan, Bis-(4-aminophenyl)-sulfon, m-Xylylendiamin, 1,2-Diaminocyclohexan, 1,4-Diaminocyclohexan, 1,3-Bis(aminomethyl)cyclohexan, 1,4-Bis-(aminomethyl)-cyclohexan, Isophorondiamin (3-Aminomethyl-3,5,5-trimethylcyclohexylamin), 1-Methylimidazol und Diaminophenylindan. Auch Polyamide können verwendet werden und werden im vorliegenden Fall von der Definition der "Amine" umfasst.

Die erfindungsgemässen Gemische können durch blosses Zusammenmischen der Komponenten oder durch Erhitzen des Gemisches bei 75 bis 130 °C während etwa 15 bis 60 Minuten, hergestellt werden. Um die Umsetzung zu erleichtern, können auch Lösungsmittel, besonders flüchtige Lösungsmittel, wie chlorierte Kohlenwasserstoffe, Ester, Etheralkohole oder Tetrahydrofuran eingesetzt werden. Das Lösungsmittel wird nach der Umsetzung entfernt.

Die Härtung der erfindungsgemässen Gemische erfolgt im allgemeinen bei Temperaturen zwischen 100 und 250 °C während einer für die Härtung ausreichenden Zeit.

Während der Härtung entsteht ein Netzwerk mit hoher Vernetzungsdichte. Der hier verwendete Ausdruck Härtung bedeutet daher die Umwandlung von Gemischen in unlösliche und nichtschmelzbare vernetzte Produkte, mit gleichzeitiger Formung zu geformten Artikeln wie z.B. Giesskörpern, Presskörpern, Laminaten, oder zu zweidimensionalen Strukturen, wie z.B. Ueberzügen, Emaillen und Klebverbindungen. Die hergestellten Ueberzüge zeichnen sich z.B. durch erhöhte Zähigkeit, insbesondere Bruchzähigkeit, aus.

Die erfindungsgemässen Gemische können in jeder Verarbeitungsphase vor der Härtung mit den üblichen Modifizierungsmitteln vermischt werden, wie z.B. Streckmittel, Füllstoffe und Verstärkungsmittel, Pigmente, Farbstoffe, organische Lösungsmittel, Plastifizierungsmittel, Mittel zur Verbesserung der Trockenklebrigkeit (Klebrigmacher), Gummis, Beschleuniger oder Verdünner. Als Streckmittel, Verstärkungsmittel, Füllstoffe und Pigmente kommen z.B. in Frage: Kohleteer, Bitumen, Glasfasern, Borfasern, Kohlefasern, Cellulose, Polyethylenpulver, Polypropylenpulver, Glimmer, Asbest, Quarzpulver, Gips, Antimontrioxid, Bentone, Siliziumdioxidaerogel ("Aerosil"), Lithopon, Barit, Titandioxid, Russ, Graphit, Eisenoxid oder Metallpulver wie z.B. Aluminiumpulver oder Eisenpulver. Den härtbaren Gemischen können auch andere übliche Zusätze, wie z.B. Flammschutzmittel, Thixotropiemittel, Verlaufsmittel, wie Silicone, Celluloseacetatbutyrat, Polyvinylbutyrat, Wachse, Stearate und ähnliches (welche zum Teil auch als Formtrennmittel verwendet werden) beigegeben werden.

Wenn die erfindungsgemässen Gemische beispielsweise als Klebstofformulierungen verwendet werden, können auch carboxylgruppenendständiger Acrylnitril-Butadien-Kautschuk, Modifizierungsharze, wie Triglycidyl-p-aminophenol, und Beschleuniger, wie Bortrifluorid-Monoethylaminkomplexe oder Imidazolkomplexe, beigegeben werden.

Die härtbaren Gemische können auf übliche Art unter Verwendung bekannter Mischaggregate, wie Rührer, Kneter, Walzkörper und ähnliches, hergestellt werden.

Die erfindungsgemässen Gemische zeichnen sich durch eine sehr gute Verarbeitbarkeit, gute Löslichkeit in üblichen organischen Lösungsmitteln, gute Stabilität in der Schmelze oder in Lösung sowie durch gute thermische und mechanische Eigenschaften der gehärteten Produkte, insbesondere durch hohe Bruchzähigkeiten aus. Die erhaltenen Produkte weisen auch gute elektrische Eigenschaften auf, haben hohe Glasumwandlungstemperaturen und sind nicht brüchig. Die erfindungsgemässen Gemische können auch problemlos als Schmelze, besonders ohne Zugabe von nichtflüchtigen Lösungsmsitteln, z.B. für die

Imprägnierung, verwendet werden.

Gegenstand der vorliegenden Erfindung sind daher auch die durch Härtung der erfindungsgemässen Gemische erhaltenen vernetzten, unschmelzbaren Produkte.

Die beschriebenen erfindungsgemässen Gemische können auf verschiedenen Gebieten eingesetzt werden, wie z.B. in Prepregs, Laminaten, Verbundstoffen, Leiterplatten, Giesslingen, Formkörpern, Klebstoffen und Ueberzügen. Von besonderem Interesse ist ihre Anwendung für die Herstellung von faserverstärkten Verbundstoffen, welche z.B. in der Luftfahrtindustrie sehr wichtig sind. So können die modifizierten Harze zum Präimprägnieren von verschiedenem faserartigem Material verwendet werden, welches als Deckschicht für Honigwabenstrukturen oder als Strukturteile eingesetzt wird. Verfahren zur Herstellung von Prepregs sind dem Fachmann bekannt. Als faserartige Materialien können z.B. Graphit, Glas, Kevlar verwendet werden. Auch Verfahren zur Herstellung von Laminaten sind bekannt. Laminate verschiedenster Dicke können z.B. durch Pressformen oder Autoklavformen hergestellt werden. Die erfindungsgemässen Gemische können auch erfolgreich als haftvermittelnde Substanzen eingesetzt werden.

In den folgenden Beispielen sind einige bevorzugte Ausführungsformen der vorliegenden Erfindung beschrieben.

Herstellung der Bismaleinimide A - F

Zu einer Lösung von 216 g Maleinsäureanhydrid in 2000 ml Aceton wird bei 0 °C eine Lösung von 1,0 Mol des entsprechenden Diamins in 1000 ml Aceton innerhalb 1 Stunde zugetropft. Man rührt 2 Stunden bei Raumtemperatur nach und gibt dann 780 ml Acetanhydrid, 90 ml Triethylamin und 14,4 g Nickel(II)-acetat-tetrahydrat hinzu. Nach 20 Stunden bei Raumtemperatur destilliert man etwa 2/3 des Acetons im Vakuum ab. Den Rückstand giesst man unter Rühren auf 5 l Wasser. Der Niederschlag wird abfiltriert, mehrmals mit Wasser gewaschen und im Vakuumschrank bei 70 °C getrocknet. Nach diesem Verfahren isoliert man das rohe Bismaleinimid in 90 - 100 % Ausbeute. Die so herstellten Bismaleinimide sind in Tabelle 1 zusammengefasst:

Tabelle 1:

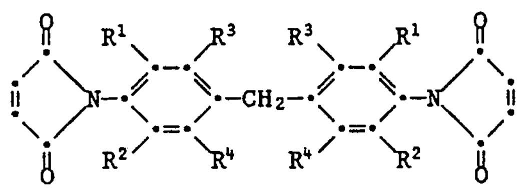

(Bisimid)

| Bis-imid | $R^1$ | $R^2$ | $R^3$ | $R^4$ | Schmelz-punkt (DSC) | Differential-thermoanalyse *) $T_A$ | $T_{max}$ | $\Delta H_R$ |
|---|---|---|---|---|---|---|---|---|
| A | $CH_3$ | $CH_3$ | H | H | 204°C | 220°C | 281°C | 118 J/g |
| B | $CH_3$ | $C_2H_5$ | H | H | 153°C | 250°C | 315°C | 180 J/g |
| C | $C_2H_5$ | $C_2H_5$ | H | H | 165°C | 240°C | 311°C | 190 J/g |
| D | 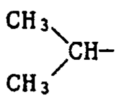 | 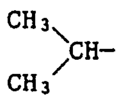 | H | H | 219°C | 308°C | 354°C | 126 J/g |
| E | $C_2H_5$ | 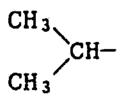 | H | H | 178°C | 260°C | 315°C | 137 J/g |
| F | $C_2H_5$ | $C_2H_5$ | Cl | H | 177°C | 300°C | 350°C | 135 J/g |

*) Differentialanalyse mit TA 3000 der Firma Mettler AG, CH-Greifensee
$T_A$ = Reaktionsbeginn, $T_{max}$ = Reaktionsmaximum,
$\Delta H_R$ = integrale Reaktionswärme

## Beispiel 1:

Eine Mischung aus 110 g N,N′-4,4′-Methylen-bis-(2-ethyl-6-methylphenylmaleinimid) (Bisimid B) und 66,5 g o,o′-Diallylbisphenol A wird bei 150 °C aufgeschmolzen. Man erhält eine gelbe, bei Raumtemperatur gerade noch flüssige Mischung mit $\eta_{120}$ = 140 mPa•s. Das Harz ist unter anderem gut löslich in Toluol, Xylol, Aceton, Methylethylketon, Methylenchlorid und Essigester. Bei der Differentialthermoanalyse zeigt das Gemisch einen Reaktionsbeginn $T_A$ bei 160 °C, ein Reaktionsmaximum $T_{max}$ bei 270 °C. Die integrale Reaktionswärme ΔH der Härtung beträgt 300 J/g.

Die Mischung wird während 15 Minuten bei 150 °C entgast, dann giesst man das dünnflüssige Harz in eine Form von 120x 120x 4 $mm^3$ und härtet 4 Stunden bei 200 °C, 2 Stunden bei 220 °C und 6 Stunden bei 250 °C. Nach dem Abkühlen zerschneidet man die transparente Polymerplatte zu Prüfstäben, an denen folgende Eigenschaften gemessen werden: Tg onset [1](TMA) : 281 °C
Biegefestigkeit nach ISO 178 bei 23 °C: 144 MPa
Randfaserdehnung nach 250 178 : 6,3 %
Schlagzähigkeit nach 250 179 : 24,7 $kJ/m^2$ Bruchzähigkeit $G_{IC}$[2]: 275 $J/m^2$
10 % dynamischer Gewichtsverlust [3]: 415 °C

## Beispiel 2:

[1] Tg-onset = Schnittpunkt der verlängerten Basislinie mit der Tangente an die Messkurve im Bereich des steilsten Anstiges (gemessen mit TMA-943, Dupont 9900 Thermonalyse).

[2] Bend Notch gemäss ASTME-399

[3] Aufheizgeschwindigkeit 10°C/Min unter Stickstoff (bestimmt mit TG 50, Mettler TA 3000)

2 g o,o′-Diallylbisphenol A und 3,1 g N,N′,4,4′-Methylen-bis-(2,6-dimethylphenylmaleinimid) (Bisimid A) werden bei 160 °C aufgeschmolzen und 15 Minuten entgast. Das klare, dünnflüssige Harz giesst man in ein Reagenzglas und härtet 4 Stunden bei 180 °C, 2 Stunden bei 200 °C und 6 Stunden bei 250 °C. Man erhält einen klaren Festkörper mit einem Tg-onset von 285 °C.

Beispiel 3:

2 g o,o′-Diallylbisphenol A und 3,5 g 4,4′-Methylen-bis-(2,6-diethylphenylmaleinimid) (Bisimid c) werden bei 140 °C aufgeschmolzen und 15 Minuten entgast. Das klare, dünnflüssige Harz giesst man in ein Reagenzglas und härtet wie in Beispiel 2 beschrieben. Man erhält einen klaren Festkörper mit einem Tg-onset von 300 °C.

Beispiel 4:

2 g o,o′-Diallylbisphenol A und 3,95 g 4,4′-Methylen-bis-(2,6-diisopropylphenylmaleinimid) (Bisimid D) werden bei 180 °C aufgeschmolzen und 15 Minuten entgast. Das klare, dünnflüssige Harz giesst man in ein Reagenzglas und härtet wie in Beispiel 2 beschrieben. Man erhält einen klaren Festkörper mit einem Tg-onset von 283 °C.

Beispiel 5:

Nach dem im Beispiel 1 beschriebenen Verfahren wird eine Mischung aus 110 g Bisimid B und 77 g Bisphenol A-diallyläther hergestellt, zu Platten vergossen und gehärtet. Folgende Eigenschaften werden an den Formkörpern gemessen:
Tg-onset : 301 °C
Biegefestigkeit : 93 MPa
Randfaserdehnung : 3,2 %
Bruchzähigkeit : 144 $J/m^2$.

Beispiel 6:

Nach dem im Beispiel 1 beschriebenen Verfahren wird eine Mischung aus 110 g Bisimid B und 84 g Bisphenol A o,o′-diallyldimethyläther hergestellt, zu Platten vergossen und gehärtet. Folgende Eigenschaften werden an den Formkörpern gemessen:
Tg-onset : 184 °C
Biegefestigkeit : 132 MPa
Randfaserdehnung : 4,0 %
Bruchzähigkeit : 281 $J/m^2$.

Beispiel 7:

Nach dem im Beispiel 1 beschriebenen Verfahren wird eine Mischung aus 110 g Bisimid B und 58 g 3,3′-Diallyl-4,4′-dihydroxy-diphenyl hergestellt, zu Platten vergossen und gehärtet. Folgende Eigenschaften werden an den Formkörpern gemessen.
Tg-onset : 291 °C
Biegefestigkeit : 150 MPa
Randfaserdehnung : 6,0 %
Bruchzähigkeit : 235 $J/m^2$.

Beispiel 8:

Zur Herstellung einer niederschmelzenden Mischung werden je 50 g Bisimid B und N,N′-4,4′-Methylen-bis-(phenylmaleinimid) bei 130 °C aufgeschmolzen. Nach dem Abkühlen erhält man eine bei Raumtemperatur glasige Mischung, die bei 50 °C erweicht und bei 100 °C eine Viskosität von 11'000 mPa•s aufweist.

Beispiel 9:

100 g der Bismaleinimidmischung gemäss Beispiel 8 und 68 g o,o′-Diallylbisphenol A werden bei 100 °C aufgeschmolzen und 15 Minuten entgast. Das dünnflüssige Gemisch giesst man anschliessend in eine Form von 120 x 120 x 4 $mm^3$ und härtet 1 Stunde bei 180 °C, 2 Stunden bei 200 °C und 6 Stunden bei 250 °C. Folgende Eigenschaften werden an den Formkörpern gemessen:
Tg-onset : 302 °C
Biegefestigkeit : 159 $N/mm^2$
Randfaserdehnung : 7,4 %.

Beispiel 10:

100 g der Bismaleinimidmischung gemäss Beispiel 8, 50 g o,o′-Diallylbisphenol A und 11,2 g 2-Allyleugenol werden bei 100 °C aufgeschmolzen und 15 Minuten entgast. Nach der Härtung wie in Beispiel 9 erhält man folgende Eigenschaften an den Formkörpern:
Tg-onset : 300 °C
Biegefestigkeit : 132 $N/mm^2$
Randfaserdehnung : 4,9 %.

**Ansprüche**

1. Härtbare Gemische enthaltend
a) ein aromatisches Bismaleinimid der Formel I

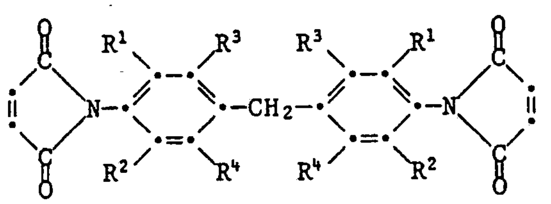

(I),

worin $R^1$ und $R^2$ gleich oder verschieden sind und je ein $C_1$-$C_4$-Alkyl bedeuten und $R^3$ und $R^4$ unabhängig voneinander je für ein Wasserstoff-oder Halogenatom stehen, oder eine Mischung aus einem aromatischen Bismaleinimid der Formel I und N,N′-4,4′-Methylen-bis-(phenylmaleinimid) im Molverhältnis von 1:0,3 - 1,2 und

b) ein Alkenylphenol, einen Alkenylphenolether oder deren Gemische, wobei die Alkenylgruppe mindestens drei C-Atome enthält.

2. Gemische gemäss Anspruch 1, enthaltend (a) ein aromatisches Bismaleinimid der Formel I und (b) ein Alkenylphenol, einen Alkenylphenolether oder deren Gemische, wobei die Alkenylgruppe mindestens drei C-Atome enthält.

3. Gemische gemäss Anspruch 1, worin pro Mol der Komponente (a) 0,05 bis 2,0 Mole, vorzugsweise 0,5 bis 1,2 Mole, der Komponente (b) enthalten sind.

4. Gemische gemäss Anspruch 1, worin in Formel I $R^1$ und $R^2$ unabhängig voneinander je für Methyl, Ethyl oder Isopropyl stehen und $R^3$ und $R^4$ je ein Wasserstoff- oder Chloratom bedeuten.

5. Gemische gemäss Anspruch 1, worin in Formel I $R^1$ und $R^2$ unabhängig voneinander je für Methyl, Ethyl oder Isopropyl stehen und $R^3$ und $R^4$ je ein Wasserstoffatom bedeuten.

6. Gemische gemäss Anspruch 1 enthaltend als Komponente (a) N,N′-4,4′-Methylen-bis-(2-ethyl-6-methylphenylmaleinimid).

7. Gemische gemäss Anspruch 1 enthaltend als Komponente (a) eine Mischung aus einem aromatischen Bismaleinimid der Formel I und N,N′-4,4′-Methylen-bis-(phenylmaleinimid) im Molverhältnis von 1:0,9 - 1,1.

8. Gemische gemäss Anspruch 1 enthaltend als Komponente (b) ein Alkenylphenol der Formeln II, III oder IV

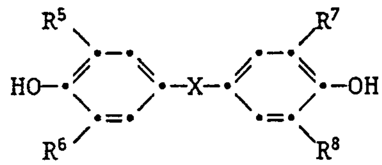

(II),

worin X eine direkte Bindung, Methylen, Isopropyliden, -O-, -S-, -SO-, $-SO_2-$ oder -CO- und $R^5$, $R^6$, $R^7$ und $R^8$ unabhängig voneinander ein Wasserstoffatom oder ein $C_3$-$C_{10}$-Alkenyl bedeuten, wobei mindestens einer der Reste $R^5$ bis $R^8$ für eine Alkenylgruppe steht,

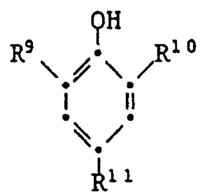

(III),

worin $R^9$, $R^{1\circ}$ und $R^{11}$ unabhängig voneinander ein Wasserstoffatom oder ein $C_3$-$C_{10}$-Alkenyl bedeuten, wobei mindestens einer der Reste $R^9$ bis $R^{11}$ für eine Alkenylgruppe steht, oder

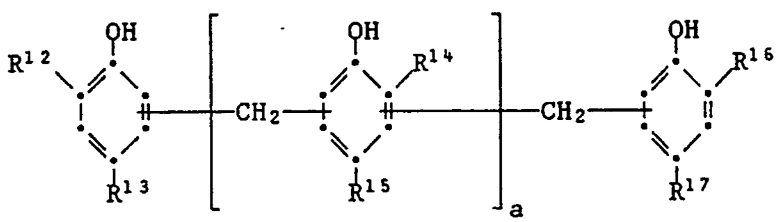

(IV),

worin $R^{12}$, $R^{13}$, $R^{14}$, $R^{15}$, $R^{16}$ und $R^{17}$ unabhängig voneinander ein Wasserstoffatom, $C_1$-$C_4$-Alkyl oder $C_3$-$C_{10}$-Alkenyl bedeuten, wobei mindestens einer der Reste $R^{12}$ bis $R^{17}$ für ein Alkenyl steht, und a eine Zahl von 0 bis 10 bedeutet, oder Ether der Verbindungen der Formeln II bis IV, welche anstelle mindestens einer HO-Gruppe einen $R^{18}$ O-Rest enthalten, wobei $R^{18}$ ein $C_1$-$C_{10}$-Alkyl, $C_6$-$C_{10}$-Aryl oder $C_3$-$C_{10}$-Alkenyl bedeutet.

9. Gemische gemäss Anspruch 8, worin in den Formeln II bis IV die Alkenylgruppe ein Allyl, Methallyl oder Propenyl ist.

10. Gemische gemäss Anspruch 8, enthaltend als Komponente (b) ein Alkenylphenol der Formel II, worin X für Methylen, Isopropyliden, -O-, $-SO_2$-oder -CO- steht, $R^5$ und $R^7$ je ein Allyl und $R^6$ und $R^8$ je ein Wasserstoffatom bedeuten.

11. Gemische gemäss Anspruch 8, enthaltend als Alkenylphenol das o,o′-Diallylbisphenol A.

12. Mischung gemäss Anspruch 1 aus einem aromatischen Bismaleinimid der Formel I und N,N′4,4′-Methylen-bis-(phenylmaleinimid) im Molverhältnis von 1:0,3 - 1,2.

13. Die durch Härtung der Gemische gemäss Anspruch 1 erhaltenen vernetzten, unschmelzbaren Produkte.

Patentansprüche für folgenden Vertragsstaat: ES

1. Verfahren zur Herstellung von vernetzten, unschmelzbaren Produkten, dadurch gekennzeichnet, dass man ein härtbares Gemisch enthaltend

a) ein aromatisches Bismaleinimid der Formel I

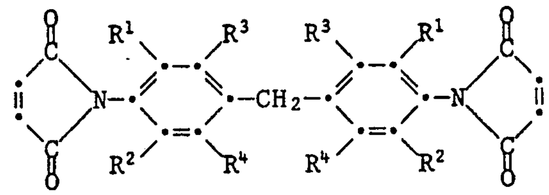

(I),

worin $R^1$ und $R^2$ gleich oder verschieden sind und je ein $C_1$-$C_4$-Alkyl bedeuten und $R^3$ und $R^4$ unabhängig voneinander je für ein Wasserstoff-oder Halogenatom stehen, oder eine Mischung aus einem aromatischen Bismaleinimid der Formel I und N,N′-4,4′-Methylen-bis-(phenylmaleinimid) im Molverhältnis von 1:0,3 - 1,2 und

b) ein Alkenylphenol, einen Alkenylphenolether oder deren Gemische, wobei die Alkenylgruppe mindestens drei C-Atome enthält, thermisch bei einer Temperatur von 100 bis 250 °C aushärtet.

2. Verfahren gemäss Anspruch 1, dadurch gekennzeichnet, dass man ein Gemisch enthaltend (a) ein aromatisches Bismaleinimid der Formel I und (b) ein Alkenylphenol, einen Alkenylphenolether oder deren Gemische, wobei die Alkenylgruppe mindestens drei C-Atome enthält, aushärtet.

3. Verfahren gemäss Anspruch 1 oder 2, dadurch gekennzeichnet, dass ein Gemisch pro Mol der Komponente (a) 0,05 bis 2,0 Mole, vorzugsweise 0,5 bis 1,2 Mole, der Komponente (b) enthalten sind.

Europäisches Patentamt

# EUROPÄISCHER RECHERCHENBERICHT

Nummer der Anmeldung

EP 90 81 0122

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2 627 045 (CIBA-GEIGY)<br>--- | | C 08 G 73/12<br>C 08 F 222/40 |
| D,A | EP-A-0 014 816 (CIBA-GEIGY)<br>--- | | |
| D,A | EP-A-0 227 598 (CIBA-GEIGY)<br>----- | | |

| RECHERCHIERTE SACHGEBIETE (Int. Cl.5) |
|---|
| C 08 G<br>C 08 F |

Der vorliegende Recherchenbericht wurde für alle Patentansprüche erstellt

| Recherchenort | Abschlußdatum der Recherche | Prüfer |
|---|---|---|
| DEN HAAG | 16-05-1990 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................
& : Mitglied der gleichen Patentfamilie, übereinstimmendes Dokument

EPO FORM 1503 03.82 (P0403)